# EUROPEAN PATENT APPLICATION

(11) **EP 3 503 563 A1**
(43) Date of publication of application: **26.06.2019**
(21) Application number: 17209066.4
(22) Date of filing: 20.12.2017
(51) Int. Cl.: H04N 21/236, H04N 21/2365, H04N 21/2368, H04N 21/242, H04N 21/43, H04N 21/434, H04N 21/8547

(54) **COMPUTER SYSTEM AND METHOD FOR SYNCHRONOUS DATA TRANSMISSION OF MULTIPLE DATA STREAMS**

(71) Applicant: Baumgart, Andreas, 69488 Birkenau (DE); Gelhardt, Karlheinz, 69488 Birkenau (DE)
(72) Inventor: Baumgart, Andreas, 69488 Birkenau (DE); Gelhardt, Karlheinz, 69488 Birkenau (DE)
(74) Representative: Bittner, Peter

(57) **Abstract**

Computer system (100), computer-implemented method and computer program product are provided for synchronous data transmission of multiple data streams. The system receives a plurality of raw data streams (301 to 30n) being simultaneously captured by respective capturing devices. Some raw data streams are enriched with clock meta data reflecting clock data of a lead raw data stream. At least one data compression module (130) compresses at compressible data chunks wherein compression algorithms are used which are associated with the raw data types of the compressible data chunks. A multiplexer (120) merges data chunks associated with the a time interval into a merged data block (300c) by inserting the data chunks into the merged data block together with header information specifying for each data chunk at least the respective raw data type, a respective compression indicator, and the position of the data chunk inside the merged data block (300c). A transmitter (122) transmits, the merged data block (300c) over a network (400) in a single data stream through a single channel (401) to a receiving device (200).

## Description

### Technical Field

The present invention generally relates to systems for data transmission, and more particularly, relates to methods, computer program products and systems for synchronous data transmission of multiple data streams.

### Background

Simultaneous transmission of multiple video, audio and/or measurement data streams in application domains such as modern medical treatment methods for diagnostic and therapeutic purposes, security surveillance systems, event monitoring for sports events, etc. can be critical. In other words, it is desirable that simultaneously recorded data streams can be simultaneously replayed which requires a synchronous transmission of all data streams. However, due to network latencies it is a problem to transmit such data streams in a frame precise manner. For example, when sending two data streams simultaneously from a source computer to a target computer over the Internet it depends on the way the two streams are routed to the target computer whether they will arrive simultaneously (synchronized) or with a network caused delay (not synchronized).

Moreover, for example for high definition image quality, large amounts of data need to be transmitted which requires high bandwidth. Therefore, data streams are typically compressed before being transmitted to save bandwidth and speed up the transmission to enable real-time transmission of the data streams. Typically, different types of data (e.g., video data, audio data, measurement data, etc.) are compressed with different compression algorithms. For example, video data may be compressed using H264/H265 compression whereas measurement data may be compressed with lossless compression methods.

Therefore there is a need to enable fully synchronized data transmission over a network, such as for example, the Internet for data originating from different data sources which simultaneously capture data, such as for example, video data and non-imaging sensor data.

### Summary

Hence, there is a need for methods and systems which allow fully synchronized data transmission over a network for data originating from different data sources which simultaneously capture data of different data types.

This technical problem is solved by a computer system, a computer-implemented method and a computer program product as disclosed in the independent claims.

In one embodiment, a computer-implemented method is provided for synchronous data transmission of multiple data streams. In an initial step a computer system receives via an appropriate interface a plurality of raw data streams. The received raw data streams are simultaneously provided by respective capturing devices. Thereby, at least two raw data streams differ with regards to the type of the captured raw data and with regards to the frequency at which the respective raw data is captured. For example, a capturing device for a video stream can be a digital video camera which is captured at a frame rate of 30 video frames per second. A capturing device for a particular technical status parameter can be a respective sensor (e.g., a temperature or pressure sensor to capture the temperature or pressure in a technical process equipment). Such sensor data may be captured at a lower frequency compared to the video frame capturing frequency (e.g. every 10 seconds or every minute, or at irregular intervals). In one particular scenario a video of the technical process equipment may be captured in parallel with the respective technical status parameters.

The received raw data streams can then be enriched by an enrichment function of the computer system which may be implemented as a function of the receiving interface. The enrichment function may also be implemented as a separate module. At least such raw data streams which are captured at a data capturing frequency which is different from a lead capturing frequency of a predetermined lead raw data stream are enriched with clock meta data reflecting clock data of the lead raw data stream.

For example, the lead raw data stream may be determined based on the signal type of the raw data stream, or based on other parameters, such as for example, the capturing frequency of the raw data stream. In one embodiment, a predefined signal type (e.g., a video data stream) indicates to the system that the capturing frequency of raw data streams of the predefined signal type is to be used as lead capturing frequency. In another embodiment, the system may automatically determine the raw data stream with the highest data capturing frequency used within the plurality of raw data streams as the lead raw data stream. The other raw data streams can then be enriched with clock meta data reflecting such clock data of the highest used data capturing frequency as lead capturing frequency. In other words, for a raw data stream where the raw data is captured at a frequency which is lower than the lead capturing frequency, this highest capturing frequency is used to define respective clock data for the lower frequency data stream. The length of a clock interval corresponds to the length of the time interval between two capturing events of a raw data stream with the lead capturing frequency. This allows to synchronize the data values of slow changing data streams with the data values of fast changing data streams. For example, in the case of a video data stream and a status parameter data stream, the video data stream may be captured at a frequency of 30 frames per second. On the other hand, the data values of the status parameter data stream may not change at a frequency higher than 6 changes per minute (i.e., every ten seconds). In this example, the parameter data stream is enriched with meta clock data which correspond to 1/30 second intervals. This allows to associate the received non-video data stream with the video stream in a frame precise manner via the clock meta data. In one embodiment, such clock meta data is implemented as a frame counter. Also raw data streams with the lead capturing frequency may be enriched, for example, with frame counter data. However, such streams with the lead capturing frequency do not need to be enriched necessarily because the granularity of the data values is already at the granularity of the lead data capturing frequency (e.g., 30 frames per second) which already reflects the clock data needed for associating each frame with respective data of an enriched data stream. It is to be noted that there may be more than one raw data stream being captured at the lead capturing frequency. For example, for three-dimensional video capturing, two video streams may be captured in parallel under slightly different viewing angles. Advantageously, both videos streams are then captured at the same frame rate (corresponding to the highest use capturing frequency).

The enrichment function can also be used to identify data chunks of the raw data streams which are associated with respective raw data captured during a same time interval (T) in accordance with the clock data. Because the enriched data streams include synchronized clock data, stream data which relate to the same time interval (data chunks) can be clearly identified in each of the enriched data streams.

Typically, raw data streams are compressed before they are transmitted over a network (e.g., an Intranet of the Internet) to save transmission bandwidth. However, different types of data are usually compressed with different compression methods (compression algorithms). Some data types (e.g., text data) may not be compressed at all. For example, some data types are advantageously compressed with lossless data compression algorithms, while other data types may be compressed with non-lossless data compression algorithms. Video data streams are often compressed using non-lossless image/video compression whereas technical status data streams are more likely compressed using lossless compression methods to avoid any data loss which could result in a wrong assessment of the technical status at any given time. The system has one or more compression modules implementing one or more compression algorithms to perform a data compression step by compressing compressible data chunks into compressed data chunks. Thereby, at least one associated compression algorithm is used which is associated with the raw data type of at least one compressible data chunk. In some cases, the clock meta data is compressed together with the respective stream data. For example, a video stream implicitly includes the clock data if they correspond to the lead capturing frequency. Therefore, a compressed video stream can include the clock data in the compressed format. In another example, sensor data may be compressed with a time stamp indicating the point in time when a change to the respective sensor value occurred or was received. For example, a zip-compression may be applied to the value pairs of sensor value and time point of the value change. Although such time points do not represent the clock data they can be assigned to respective clock intervals within a data chunk for a particular time interval after their decompression because the offsets with regards to the starting time point of the data chunk and the lead capturing frequency are known.

For example two different compression algorithms may be used for two different raw data streams with two different raw data types (e.g., the video stream data may be compressed with non-lossless video compression and measured status parameter streams may be compressed with lossless data compression). Each compressed data chunk is associated with respective raw data captured during the same time interval. This is guaranteed by compressing such parts of the raw data streams into compressed data chunks which include corresponding clock meta data values (i.e., the data chunks identified by the enrichment function).

In one embodiment, the association of data values in a particular enriched data stream - having a data capturing frequency lower than the highest used data capturing frequency - with data values of other simultaneously captured data streams data can be achieved by filling the raw data values for respective clock meta data values with the latest received raw data value for the respective enriched data stream. That is, once a data value is received for the particular enriched data stream, this data value is replicated for each clock interval (defined by the respective clock meta data) until a new data value is received. In the previously described example of associating video stream data with measurement data this allows a frame precise matching of the data values of both data streams.

In an alternative embodiment, the size of the enriched data stream can be reduced. When a changed raw data value is received in a particular raw data stream having a data capturing frequency lower than the highest used data capturing frequency, a clock counter is initialized for the respective enriched data stream. The clock counter is incremented with each clock interval. The latest clock counter value is then stored together with the changed raw data value as an element of the respective enriched raw data stream when a further change of the raw data value occurs. In other words, as long as a data value of the particular enriched data stream stays constant, the clock counter is counting the number of clock intervals during which the same data value is valid. When a change of the data value occurs, the original value is stored together with the number of clock intervals and the counter is reset to count the number of clock intervals during which the changed data value is valid. In this embodiment, less memory is consumed because only one data value pair needs to be stored for each data value change in the enriched data stream.

In one embodiment, prior to compressing clocked data streams, the system may concatenate multiple enriched data chunks having the same raw data type as the raw data type of the least one compressible data chunk into a single concatenated data chunk. For example, in the case of stereo-video streams, both video streams may be concatenated and occupy portions of equal size in the concatenated data chunk. In this embodiment, the concatenated and compressible data chunk can be compressed by a single respective compression algorithm. This embodiment can save header information in the later merging step which is disclosed further down.

A multiplexer module of the system merges the data chunks (i.e. the compressed data chunk(s) and further data chunks we may not be compressed) associated with the same time interval into a merged data block. Thereby, the compressed data chunks are inserted into the merged data block together with header information. The header information specifies for each data chunk at least the respective raw data type, a respective compression indicator, and the position of the data chunk inside the merged data block. For example, the position can be specified by providing the start address of the data chunk in the merged data block and its respective end address. In another implementation, the header may include the respective start address and the size of the data chunk. The compression indicator may be a reference to a compression algorithm used for compression of the compressed data chunks or it may indicate that a data chunk is not compressed at all.

A transmitter of the system finally transmits the merged data block to a receiving device over a network in a single data stream through a single channel. The compressing, merging and transmitting steps can then be repeated for each given time interval during the duration of the data transmission. This allows to continuously transmit to the receiving device merged data blocks including synchronized data chunks of multiple data streams. The transmission of such merged data blocks through a single channel allows for synchronous transmission of multiple data streams over a network where normally network latencies would prevent such a synchronous transmission when using multiple channels (e.g., one channel by data stream).

In one embodiment, a receiving device receives the single data stream. The receiving device has a demultiplexer which applies decomposition and decompression to the received merged data block(s). For decomposing the single data stream a decomposer of the demultiplexer uses the respective header information of the merged data block. The decomposing steps results in regaining the data chunks which were merged into the merged data block. A decompressor of the demultiplexer decompresses the decomposed data stream sections in accordance with the respective compression indicators. That is, such data chunks which were compressed before the merging step are now decompressed with the appropriate algorithm which is selected according to the respective compression indicator.

In one embodiment, a computer program product is provided that, when loaded into a memory of a computing device and executed by at least one processor of the computing device, executes the steps of the computer implemented method as disclosed herein.

In one embodiment, a computer system for synchronous data transmission of multiple data streams is provided. The computer system has memory and processor components configured to run a computer program for executing the above described computer-implemented method.

The system has an interface configured to receive a plurality of raw data streams being simultaneously captured by respective capturing devices. At least two raw data streams differ with regards to the type of the captured raw data and with regards to the frequency at which the respective raw data is captured.

Further, the system is configured to enrich at least such raw data streams captured at a data capturing frequency lower than the highest data capturing frequency used within the plurality of raw data streams with clock meta data reflecting clock data of the highest used data capturing frequency. As a result, each enriched data stream is segmented into clock intervals which correspond to the capturing frequency of the highest used capturing frequency. This allows to associate data values of all raw data streams at a time granularity which corresponds to the highest used capturing frequency.

Further, the system is configured to identify data chunks of the raw data streams which are associated with respective raw data captured during a same time interval in accordance with the clock data.

At least one data compression module of the system is configured to compress at least one compressible data chunk into at least one compressed data chunk. For compression, at least one associated compression algorithm is used which is associated with the raw data type of the at least one compressible data chunk.

A multiplexer of the system merges the data chunks associated with same time interval(s) into a more merged data block. Thereby, multiple compressed data chunks which may have been compressed with different compression algorithms may be merged with uncompressed data chunks by inserting the data chunks into the merged data block together with header information. The header information specifies for each data chunk at least the respective raw data type, a respective compression indicator, and the position of the compressed data chunk inside the merged data block.

A transmitter of the system transmits, to a receiving device, the merged data block over a network in a single data stream through a single channel.

In one embodiment, a receiving device is communicatively coupled with the computer system. The receiving device has an interface configured to receive the single data stream from the computer system. A demultiplexer of the receiving device decomposes the single data stream by analyzing respective header information of the merged data block. Further, it decompresses the decomposed data stream sections in accordance with the respective compression indicator.

In one embodiment, the receiving device further includes applications to present the decomposed and decompressed data to a user as multiple synchronous data streams.

The computer system and the receiving device can be seen as encoding and decoding entities wherein the encoder performs time-stamp preserving stream chunking with regards to stream data segments related to the same time interval.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 shows a simplified diagram of a computer system for synchronous data transmission of multiple data streams and a corresponding receiver device according to an embodiment of the invention;
FIG. 2 is a simplified flowchart of a computer-implemented method for synchronous data transmission of multiple data streams which can be performed by embodiments of the invention;
FIG. 3 illustrates raw data streams of different data types;
FIGs. 4A, 4B illustrate embodiments for enriching raw data streams with clock meta data;
FIGs. 5A, 5B illustrate examples of merged data block creation according to embodiments of the invention;
   and
FIG. 6 is a diagram that shows an example of a generic computer device and a generic mobile computer device, which may be used with the techniques described here.

### Detailed Description

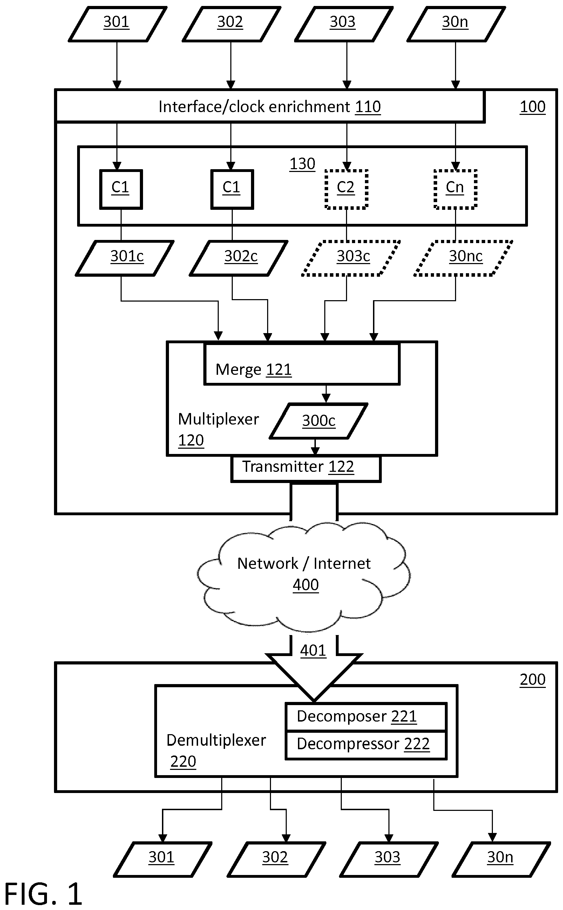

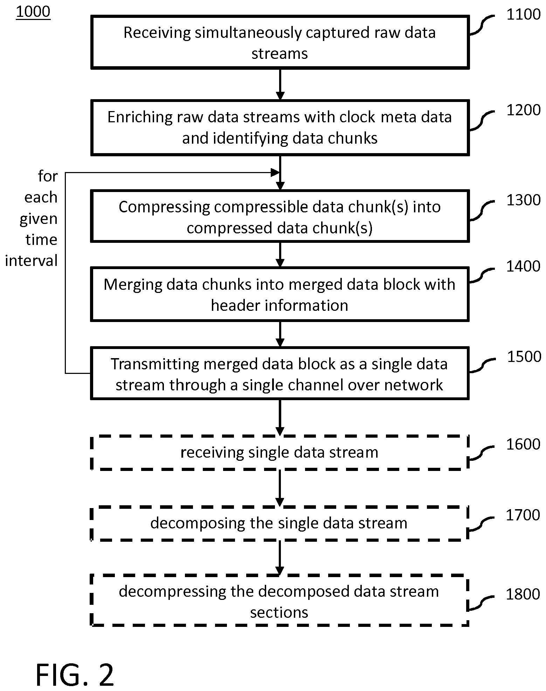

FIG. 1 shows a simplified diagram of an embodiment of a computer system 100 for synchronous data transmission of multiple data streams. The computer system 100 is communicatively coupled to a receiving device 200 over a network 400, such as for example, a local area network (LAN) or the Internet. FIG. 1 is described in the context of FIG. 2 which is a simplified flowchart of a computer-implemented method 1000 for synchronous data transmission of multiple data streams which can be performed by embodiments of the computer system 100 and the receiving device 200. Method steps illustrated by dashed boxes are optional steps of the method 1000. The following description of FIG. 1 in the context of FIG. 2 refers to reference numbers of both figures.

The computer system 100 has an interface 110 to receive 1100 a plurality of raw data streams 301 to 30n being simultaneously provided by respective capturing devices. At least two raw data streams (e.g. 301 and 303) differ with regards to the type of the captured raw data and with regards to the frequency at which the respective raw data is captured.

For example, the raw data stream 301 may be a video stream and the raw data stream 303 may be a non-video data stream. For example, data stream 303 may be a text data stream providing text associated with the video stream (e.g., subtitles for the video stream), or it may be a data stream with measured sensor data, or it may be an audio stream, and so on. The raw data streams 301 to 30n are captured and transmitted to the interface 110 in such a way that it can be assumed that data which were captured simultaneously arrive at the interface 110 at the same point in time. It is desired to transmit such data to the receiving device 200 over the network 400.

Typically, the received raw data streams would be transmitted in parallel to the receiving device through respective data channels provided by the network 400. However, each network suffers from network latencies so that it cannot be guaranteed that data which is simultaneously transmitted via parallel channels of a network - with or without compression - is synchronously received by the receiving device at the same point in time because the propagation delays may be different for different channels. In other words, if the different data channels suffer from different delays, data which has been sent in parallel at the same point in time will not arrive simultaneously. Rather, they will arrive at different points in time dependent on the delays of each of the channels. If the network 400 is the Internet, such delays can be significant dependent on the routing of the data streams used by the various channels. The receiving device is thus not able to reconstruct the received data in such a manner that they reflect the same timing as the originally captured data streams.

To overcome this technical problem, the computer system 100 enriches 1200 raw data with meta data. At least such raw data streams captured at a data capturing frequency different from a lead capturing frequency of a predetermined lead raw data stream are enriched 1200 with clock meta data reflecting clock data of the lead raw data stream. In other words, the system has an enrichment module which may be implemented as a part of the interface 110 or as a separate component. The enrichment module determines the capturing frequency associated which a raw data stream which qualifies as lead data stream. For example, in application scenarios where video streams are transmitted together which non-video data, a challenge is to synchronize the non-video data streams with the video streams(s) in a frame precise manner. In such scenarios, the video stream data type can be defined as the stream data type associated with the lead data stream. The lead data stream can then be determined as any one of one or more video streams included in the plurality of raw data streams. The clock data which can be derived from the lead capturing frequency can now be propagated to the other raw data streams because the respective signals are received simultaneously by the enrichment module which allows to add such synchronizing clock data to any one of the received raw data streams.

Typically, video data streams have data capturing frequencies of 30 pictures/sec (frame rate). (This assumption is convenient for explanation, implementations with other picture per second numbers are also contemplated, such as 24 pic/sec). Non-video data may have significantly lower data capturing frequencies (e.g., only one change every couple of seconds). Examples of such slow changing non-video data streams can be measurement data captured by sensors or text data associated with the video data (e.g. sub titles). It may be of interest to simultaneously display the data originating from different raw data streams, for example on the same display, in order to display the data in their correct context. Besides using the stream data type "video" to determine a lead data stream with an associated lead capturing frequency, in such scenarios, the system may also determine the lead data stream as a raw data stream having the highest used data capturing frequency amongst the plurality of raw data streams.

However, the system may also receive non-video data changing at a higher capturing frequency than the one associated with the video data. For example, an audio data stream is typically captured at a capturing frequency of 44 kHz. In such cases, a predefined data stream type "video" may nevertheless lead to a video data stream being determined as the lead data stream. That is, the associated lead capturing frequency is still used as the clock data for all the other raw data streams including the audio data stream. For non-lead data streams with a higher capturing frequency than the lead capturing frequency respective clock data is enriched in that the clock data partitions the received raw data stream into stream intervals which correspond to the clock data of the lead data stream. In the audio stream example, audio stream segments of 1/30 sec are created by the enrichment module by adding the respective clock data in sync with the lead data stream. In cases where at least one of the data streams is a video stream the data of the other enriched data streams can be assigned to the video data in a frame precise manner based on the synchronized clock data. For example, a frame counter can be used to implement the clock data.

Finally, the enrichment module identifies data chunks of the raw data streams which are associated with respective raw data captured during a same time interval in accordance with the clock data. In other words, the identified data chunks include raw stream data of all received raw data streams which reflect data that was captured during the same time interval. The same time interval is unambiguously defined by the respective clock data (e.g., 1/30 second).

The computer system 100 further includes at least one data compression module 130. The data compression module provides one or more compression algorithms C1 to Cn. At least one of the enriched data chunks is a compressible data chunk. The compression module compresses 1300 the at least one compressible data chunk into at least one compressed data chunk 301c. For the compression the at least one associated compression algorithm C1 is used which is associated with the raw data type of the at least one compressible data chunk. In the example of FIG.1, the raw data streams 301, 302 may be video streams (e.g., for a stereo video, or two independent video channel streams to be streamed over the Internet). In this case, an appropriate video compression algorithm C1 (e.g., JPEG, MPEG, H.261, H.263, H.264, etc.) is used for each video stream. Although video compression algorithms are typically non-lossless (lossy), the picture quality of the compressed video streams is still sufficiently good. When compressing compressible data chunks, the clock data may me compressed too. For example, for any data stream captured at the lead capturing frequency, the clock data is implicitly included in the compressed data chunk. For example, if the capturing frequency of a video stream is the lead capturing frequency, the frame intervals are automatically part of the compressed data chunk.

Other raw data streams may include data which is not necessarily subject to compression. For example, raw data stream 303 may include text data which provide subtitles to one of the video streams 301 or 302. Text data typically is already in a very compact format. In other words, text data requires less memory, bandwidth, etc. than some other data stream data types like, for example, video data or audio data. An additional compression by using and optional text compression algorithm C2 would not necessarily lead to a significant reduction of the text data to be transmitted. However, it may consume significant processing power for the compression execution. Therefore, in the example, the compression of the non-video streams 303, 30n with respective compression algorithms C2, Cn is optional. Audio data is another example, where non video data is typically compressed. For audio compression, lossless and lossy compression algorithms are available. An example for lossy audio compression is the mp3 format. An example for lossless audio compression includes Free Lossless Audio Codec (FLAC). An example of uncompressed audio data includes WAVeform (WAV). Another example for non-video data is sensor measurement data. Dependent on the capturing frequency of such measurement data compression may be useful if the amount of measurement data is sufficiently data. For the compression of measurement data streams a lossless compression algorithm (e.g., a zip algorithm) is advantageous because measurement data typically are needed without any falsification.

To summarize, the compression module may compress some of the enriched data chunks with corresponding compression algorithms (e.g., C1) and output respective compressed data chunks 301 c, 302c whereas other enriched data chunks may simply be forwarded to the next data processing stage. In the example, data enriched chunks resulting from the data streams 303, 30n may optionally be compressed into compressed data chunks 303c, 30nc. This may be the case when such data streams have a data stream data type which is associated with a respective compression algorithm C2, Cn (e.g., audio stream or sensor data stream). Other stream data types (e.g., text stream) may not be subject to compression in the compression module 130.

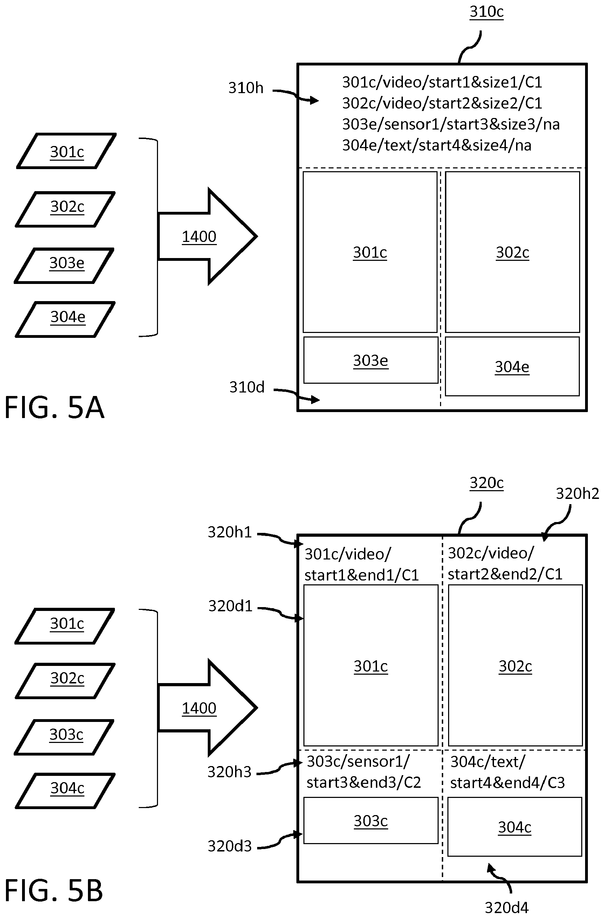

The computer system 100 further has a multiplexer 120. The multiplexer merges 1400 the data chunks after the compression stage, for example, using the merge component 121. This includes merging of the at least one compressed data chunk 301 c with other compressed or non-compressed (enriched) data chunk(s). The data chunks which are merged at this stage into a merged 1400 data block 300c are all associated with the same time interval. In other words, clock data enriching the raw data streams is used to bundle data chunks which relate to the same interval and finally merge such data chunks into a single data block. This is achieved by inserting the data chunks into the merged data block together with respective header information. The header information specifies for each data chunk at least the respective raw data type, a respective compression indicator, and the position of the data chunk inside the merged data block 300c. Examples of the raw data type are the previously disclosed examples such as, video data, audio data, sensor data , text data, etc. Examples of compression indicators are references to the used compression indicators (e.g., MPEG for video, mp3 for audio, zip for measurement data, etc.) or an indicator that the data is not compressed. The position of the data chunk inside the merged data block can be indicated for example by a start and end address of the data chunk or by a start address and the size of data chunk. Detailed embodiments for header structures are discussed in FIGs. 5A, 5B.

The computer system further has a transmitter 122 to transmit 1500, to a receiving device 200, the merged data block 300c over a network 400 in a single data stream through a single channel 401. The receiving device 200 is supposed to reconstruct the original data streams to present them to a consumer of the data streams in a synchronous manner. The merged data block includes all data chunks of the parallel raw data streams which relate to the same time interval. Thereby, the data can be sent through a single channel where potential delays caused by network latencies affect all simultaneous stream data of the different merged data chunks in the same manner. That is, the receiving device can reconstruct the synchronous data chunks of the merged data block.

The computer system 100 can now repeat the compressing 1300, merging 1400 and transmitting 1500 steps for each given time interval. In other words, the data chunks within a single merged block relate to a same time interval. When repeating such steps for the next time interval and for the next after the next time interval, etc. a continuous stream of merged data blocks is transmitted which can then be reconstructed at the receiving device into the original continuous data streams 301 to 30n.

The receiving device 200 is communicatively coupled with the computer system 100 over the network 400 and includes an interface configured to receive 1600 the single data stream 401. A demultiplexer 220 of the receiving device has a decomposer 221 which decomposes 1700 the single data stream 401 by analyzing respective header information of the merged data block 300c and extracting the separate data chunks from the merged data block in accordance with the header information. Thereby, the merged data chunks are reconstructed as separate entities. After the decomposition at least one of the data chunks is still in a compressed format. Based on the compression indicator, the receiving device selects the appropriate algorithm to decompress 1800 the at least one compressed data chunk using decompressor 222. Repeating such decomposition and decompression steps for a sequence of merged data blocks the original raw data streams are reconstructed and can be replayed in a perfectly synchronized manner by using the clock data included in the reconstructed enriched data chunks.

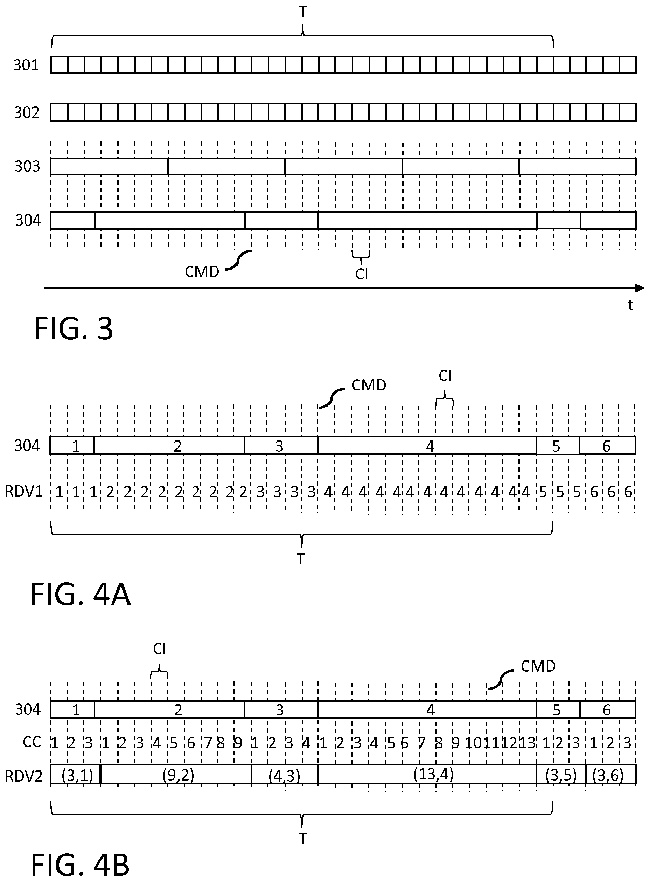

FIG. 3 illustrates raw data streams 301 to 304 of different data types over time t. In the example, the raw data streams 301 and 302 are video streams with a capturing frequency of 30 frames/second. Each square represents a 1/30 second time interval corresponding to one frame. In the example, the data streams 303 and 304 are non-video streams with capturing frequencies lower than the video streams. For example, data stream 303 may be a sensor data stream providing a measurement value which may be somehow associated with at least one of the video streams. In the example, the measurement value is updated at time intervals which correspond to the length of seven frames. For example, the video streams may represent a stereo video of a surgical operation and the measurement value may provide a physical health parameter (e.g., heartbeat, blood pressure, etc.) of the patient in the video. The data stream 304 may include sub-titles (text data) which are to be rendered into the video when displayed by a display device (e.g., the receiving device). In the example, the subtitles are updated at irregular intervals. The sub-titles may provide written explanations of what is shown in the video stream. For example, the sub-titles may be generated in real-time by a speech-to-text converter based on spoken language recorded while a corresponding video stream is recorded. Sub-titles may also be provided in the form of a predefined data stream which displays a text translation of a spoken language.

In the example, the capturing frequency of the video streams is used as the lead capturing frequency for determining the clock meta data CMD when enriching the data streams 303, 304 with clock data. The dashed lines illustrate the points in time for which clock data is added to the raw data streams 303, 304. As a result, after the clock data enrichment, each received raw data stream is segmented into clock intervals CI which correspond to the lead capturing frequency of 30/s. In other words, each stream data of the data streams 303, 304 is associated with a corresponding frame interval of the video streams through the respective clock data. A frame counter can be used as a unique identifier for each clock interval CI. This allows the receiving device 200 to map the stream data of the non-video streams to the respective video streams in a frame precise manner.

The time interval T illustrates an interval which defines the number of clock cycles defining the size of the enriched data chunks. In reality, the interval T is likely to be larger than illustrated in the example. T defines the size of the merged data blocks to be transmitted. The interval T may be a predefined value or it may be determined by the system based on parameters such as the bandwidth available for data transmission or the stream buffer size of the receiving device. The larger the interval T is chosen the higher the delay will be at the receiving device when replaying the received data streams. The reason is that the decoding of the received merged data block can only start once the entire merged data block is received. This leads to a delay of at least the time interval T. That is, for near-real-time replay requirements it is advantageous to choose relatively short intervals T which leads to transmission of relatively small data chunks. In practice, a near-real-time requirement for a transmission is typically in the range of 1 to 2 seconds delay for the replayed data streams in relation to the capturing of the data streams. However, in some applications a delay of less than one second may be required. To achieve such real-time behavior typically the time interval T can be chosen in the range between 100 to 500 milliseconds, preferably in the range of 100 to 200 milliseconds. Dependent on the delays caused by the transmitting network, larger intervals may be possible for still achieving near-real-time behavior. In cases where real-time behavior is not a requirement, even larger time intervals T may be chosen.

FIGs. 4A, 4B illustrate two embodiments for enriching the raw data stream 304 with clock meta data. In the embodiment of FIG. 4A, for the data stream 304 which has a data capturing frequency lower than the lead data capturing frequency the raw data values RDV1 for respective clock intervals may be filled with the latest received raw data value for the respective enriched data stream 304. In the example, the raw data values are received as the sequence "1, 2, 3, 4, 5, 6". Thereby, the raw data values are received when the values change (e.g., a sensor is sending data only when the measurement value has changed). That is, the data is not continuously received. The raw data value "1" is valid for about 2 ½ clock intervals. Therefore, the respective RDV1 value is set to "1" for the first three clock intervals of interval T. The raw data value "2" is valid for about 9 clock intervals. Therefore, the respective RDV1 value is set to "2" for the clock intervals 4 to 12 of interval T, and so on.

In the embodiment of FIG. 4B, the raw data values RDV2 for the respective clock intervals (CI) for raw data stream enrichment of data stream 304 are determined by an alternative method. Whenever a changed raw data value is received through raw data stream 304 a data stream specific clock counter CC is initialized. In the example, CC is set to 1 after each change of the stream data value. The clock counter CC is then incremented with each clock interval. The latest clock counter value is stored together with the changed raw data value as an element RDV2 of the respective enriched raw data stream 304 when a further change of the raw data value occurs. In the example, at the beginning of interval T CC is initialized. The data value of data stream 304 remains "1" for the first 2 ½ clock intervals. As a consequence, the CC is incremented up to the value of "3". When the next change of the stream data occurs (value "1 "), CC is initialized again and the latest counter value before the initialization ("3") is stored together with the stream data value of this previous period as value pair (3,1). For the next data change, the RDV2 value pair (9,2) is stored indicating that the value "2" was received for the clock intervals 4 to 12, and so on. This method allows a more memory efficient storage of the enrichment data at clock interval granularity. In scenarios where the enriched data stream (e.g., RDV1 or RDV2) is compressed, the clock data is part of the compressed data chunk. However, it can already be sufficient to only compress the respective raw data streams (e.g., 303, 304) together with the time offsets for stream data value changes in relation to the start of the interval T. This information is sufficient to reconstruct the assignments of the stream data values to respective clock intervals as defined by the lead capturing frequency at a later point in time.

FIGs. 5A, 5B illustrate examples of merged data block creation according to different embodiments 310c, 320c of the invention. In the embodiment illustrated in FIG. 5A, two compressed data chunks 301 c, 302c are merged 1400 with uncompressed enriched data chunks 303e, 304e into the merged data block 310c. In this embodiment, the merged data block 310c includes a header section 310h and a data section 310d. The header section includes for each merged data chunk a data chunk identifier (301 c, 302c, 303e, 304e, etc.) the raw data type of the respective data stream (video, sensor1, text, etc.), and the position data of the data chunk inside the merged data block 310c. In this embodiment, the position data is expressed through the start address of the data chunk (start1 to start 4) and the size of the data chunk (size1 to size4). Further, each data chunk header includes a respective compression indicator indicating if the data chunk has been compressed (C1) or not (na). By analyzing the header section 310h, the receiving device can reconstruct the original data chunks from the received merged data block 310c as explained earlier. This embodiment allows parallel processing when reconstructing the original data chunks because the initial header information includes all information to retrieve the chunk specific data in parallel.

In the embodiment illustrated in FIG. 5B, four compressed data chunks 301c, 302c, 303c, 304c are merged 1400 into the merged data block 320c. In this embodiment, the merged data block 320c includes multiple header sections 320h1 to 320h4 which precede their respective data sections 320d1 to 320d4. Each header section includes for the subsequent data section the respective data chunk identifier (301 c, 302c, 303c, 304c) the raw data type of the respective data stream (video, sensor1, text), and the position data of the data chunk inside the merged data block 320c. In this embodiment, the position data is expressed through the start address of the data chunk (start1 to start 4) and the end address of the data chunk (end1 to end4). Thereby, the system knows that after the end address of a data section the next header section starts or the merged data block ends. Further, each data chunk header has a respective compression indicator indicating if the data chunk has been compressed (C1 to C3) or not. By analyzing a header section, the receiving device can reconstruct the following original data chunk from the received merged data block 320c. This embodiment allows serial processing of the merged data chunks when reconstructing the original data chunks where the next header is accessed once the previous data chunk has been processed. Also regarding the merging of the data block serial processing is performed. That is, an enriched or compressed data chunk can be immediately written to the merged data block after the enrichment/compression steps whereas the embodiment in FIG. 5A first generates all enriched/compressed data chunks and then writes a central header to the merged data block.

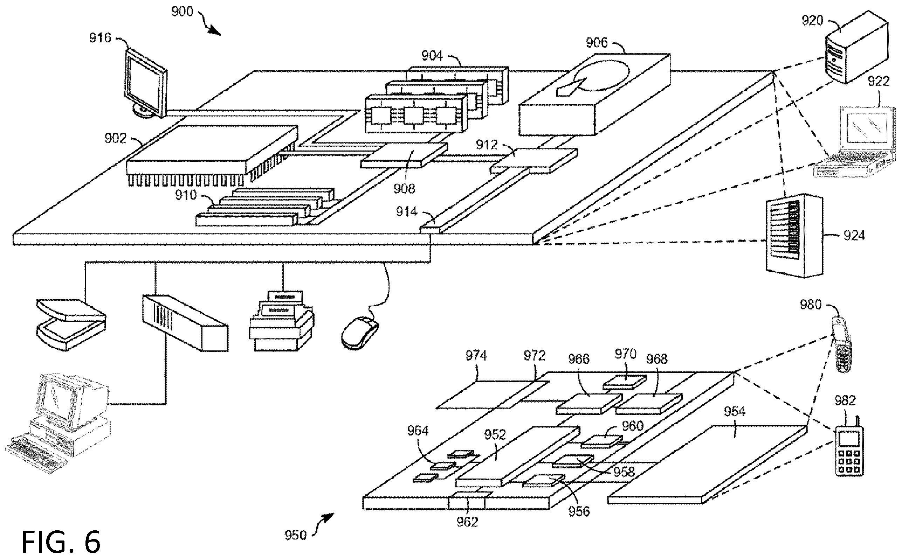

FIG. 6 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computer system 100 of FIG. 1. Also the receiving device 200 can be implemented in the form of a device like computing device 900. Computing device 950 is intended to represent various forms of mobile devices, such as personal digital assistants, cellular telephones, smart phones, driving assistance systems or board computers of vehicles (e.g., vehicles 401, 402, 403, cf. FIG. 1) and other similar computing devices. For example, computing device 950 may be used as a frontend by a user to interact with the computing device 900 or receiving device 200 (e.g., for the synchronous display of the reconstructed data streams after the transmission though a single channel). The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A computer-implemented method (1000) for synchronous data transmission of multiple data streams, the method comprising:
receiving (1100) a plurality of raw data streams (301 to 30n) being simultaneously provided by respective capturing devices wherein at least two raw data streams differ with regards to the type of the captured raw data and with regards to the frequency at which the respective raw data is captured;
enriching (1200) at least such raw data streams captured at a data capturing frequency different from a lead capturing frequency of a predetermined lead raw data stream, with clock meta data (CMD) reflecting clock data of the lead raw data stream, and identifying data chunks of the raw data streams which are associated with respective raw data captured during a time interval (T) in accordance with the clock data;
compressing (1300) at least one compressible data chunk (301, 302) into at least one compressed data chunk (301 c, 302c)) wherein at least one associated compression algorithm (C1) is used which is associated with the raw data type of the at least one compressible data chunk; and
merging (1400) the data chunks, including the at least one compressed data chunk (301c, 302c), associated with the same time interval (T) into a merged data block (300c) by inserting the data chunks into the merged data block together with header information, the header information specifying for each data chunk at least the respective raw data type, a respective compression indicator, and the position of the data chunk inside the merged data block (300c); and
transmitting (1500), to a receiving device (200), the merged data block (300c) over a network (400) in a single data stream through a single channel (401).

2. The method of claim 1, wherein the compressing (1300), merging (1400) and transmitting steps are repeated for each given time interval during the duration of the data transmission.

3. The method of claim 1 or 2, wherein at least a first compression algorithm provides non-lossless data compression for a first raw data stream and at least a second compression algorithm provides lossless data compression for a second data stream.

4. The method of any of claim 3, wherein the first data stream is a video stream with the first compression algorithm (C1) being an image/video compression algorithm, and the second data stream is a non-video data stream with the second compression algorithm (C2) being a non-image/video compression algorithm, and wherein the received non-video data stream is associated with the video stream in a frame precise manner via the clock meta data.

5. The method of claim 4, wherein the clock meta data (CMD) is implemented as a frame counter.

6. The method of any of the previous claims, further comprising:
receiving (1600), by the receiving device (200), the single data stream;
decomposing (1700) the single data stream by using the respective header information of the merged data block (300c); and
decompressing (1800) the decomposed data stream sections in accordance with the respective compression indicator.

7. The method of any of the previous claims, wherein for a particular enriched data stream (304) with a data capturing frequency lower than the lead capturing frequency, the raw data values (RDV1) for respective clock intervals are filled with the latest received raw data value for the respective enriched data stream (304).

8. The method of any of the claims 1 to 6, further comprising:
when a changed raw data value is received in a particular raw data stream with time intervals between changes of the stream data values being longer than a clock interval corresponding to the lead capturing frequency, initializing a clock counter (CC) for the respective enriched data stream;
incrementing the clock counter with each clock interval; and
storing the latest clock counter value together with the changed raw data value as an element of the respective enriched raw data stream when a further change of the raw data value occurs.

9. The method of any of the previous claims; further comprising:
prior to compressing (1300), concatenating multiple enriched data chunks having the same raw data type as the raw data type of the least one compressible data chunk into a single concatenated data chunk;
and wherein compressing (1300) further comprises: compressing the concatenated data chunk with the associated compression algorithm.

10. A computer program product that when loaded into a memory of a computing device and executed by at least one processor of the computing device executes the steps of the computer implemented method according to any of the previous claims.

11. A computer system (100) for synchronous data transmission of multiple data streams, comprising:
an interface (110) configured to receive a plurality of raw data streams (301 to 30n) being simultaneously provided by respective capturing devices wherein at least two raw data streams differ with regards to the type of the captured raw data and with regards to the frequency at which the respective raw data is captured, and further configured to enrich at least such raw data streams captured at a data capturing frequency different from a lead capturing frequency of a predetermined lead raw data stream, with clock meta data (CMD) reflecting clock data of the lead raw data stream, and to identify data chunks of the raw data streams which are associated with respective raw data captured during a same time interval (T) in accordance with the clock data;
at least one data compression module (130) configured to compress at least one compressible data chunk into at least one compressed data chunk (301 c) wherein at least one associated compression algorithm is used which is associated with the raw data type of the at least one compressible data chunk;
a multiplexer (120) configured to merge the data chunks, including the at least one compressed data chunk (301c), associated with the same time interval (T) into a merged data block (300c) by inserting the data chunks into the merged data block together with header information, the header information specifying for each data chunk at least the respective raw data type, a respective compression indicator, and the position of the data chunk inside the merged data block (300c); and
a transmitter (122) configured to transmit, to a receiving device (200), the merged data block (300c) over a network (400) in a single data stream through a single channel (401).

12. The system of claim 11, wherein a first data stream is a video stream associated with non-lossless image/video compression algorithm, and a second data stream is a non-video data stream with a lossless non-image/video compression algorithm, and wherein the received non-video data stream is associated with the video stream in a frame precise manner via the clock meta data.

13. The system of claim 12, wherein the clock meta data is implemented as a frame counter.

14. A receiving device (200) communicatively coupled with the computer system (100) according to any of claims claim 10 to 13, the receiving device comprising:
an interface configured to receive the single data stream (401);
a demultiplexer (220) configured to decompose the single data stream (401) by analyzing respective header information of the merged data block (300c), and configured to decompress the decomposed data stream sections in accordance with the respective compression indicator.

15. The receiving device of claim 14, further comprising:
one or more applications configured to present the decomposed and decompressed data streams to a user as multiple synchronous data streams.
